# EUROPEAN PATENT APPLICATION

(11) **EP 4 360 471 A1**
(43) Date of publication of application: **01.05.2024**
(21) Application number: 22828476.6
(22) Date of filing: 22.06.2022
(51) Int. Cl.: A23L 27/00, A23C 20/00, A23C 20/02, A23J 3/00, A23L 2/66, A23L 5/00, A23L 7/10, A23L 9/20, A23L 11/65, A23L 13/00, A23L 13/40, A23L 25/00, A23L 27/20, A23L 27/24, A23L 29/00

(54) **MASKING FLAVORANT**

(30) Priority: 22.06.2021 JP 2021103030
(71) Applicant: Fuji Oil Holdings Inc., Izumisano-shi, Osaka 598-8540 (JP)
(72) Inventor: SHIROTANI, Naoki, Izumisano-shi, Osaka 598-8540 (JP); HASHIMOTO, Shuzo, Izumisano-shi, Osaka 598-8540 (JP); TAKEDA, Shinsuke, Izumisano-shi, Osaka 598-8540 (JP); MIZUSHIMA, Shigeki, Tsukubamirai-shi, Ibaraki 300-2436 (JP)
(74) Representative: Becker, Eberhard
(86) International application number: PCT/JP2022/024986
(87) International publication number: WO 2022/270560

(57) **Abstract**

The present invention addresses the problem of enhancing flavor while masking various off-flavors in foods. (1) A masking flavorant containing isovaleric acid and/or phenethyl alcohol, and a lactone, wherein the (lactone)/(isovaleric acid and phenethyl alcohol) weight ratio is 0.1-1,000. (2) The masking flavorant described in (1), for which at least one selection from the group consisting of isovaleric acid, phenethyl alcohol, and lactones is a microbial fermentation product provided by (A) a yeast and/or koji mold, or (B) a yeast and/or koji mold and lactic acid bacteria. (3) A food that contains the masking flavorant described in (1) or (2) and that has a lactone content of at least 1 ppb on a weight basis. (4) The food described in (3), that does not contain an animal-derived ingredient. (5) The food described in (3), that contains an unsaturated fatty acid and/or an oil or fat that contains an unsaturated fatty acid. (6) The food described in (3), that contains an oil or fat powder from an unsaturated fatty acid and/or from an oil or fat that contains an unsaturated fatty acid.

## Description

### Technical Field

The present invention relates to a flavorant containing lactones and isovaleric acid and/or phenethyl alcohol in a predetermined ratio and having a masking effect.

### Background Art

Under the influence of an increase in world population and global warming, there is a need to achieve, also in food business, both realization of a sustainable society in consideration of the global environment and provision of delicious food resources. In particular, in animal foods, greenhouse gases derived from livestock are said to have a great influence on global warming, and it is predicted that animal food resources will be depleted with an increase in population in the future. In recent years, plant-based substitute foods such as plant-based milk, plant-based cheese, and meat substitutes have attracted worldwide attention as foods to replace animal foods. However, deliciousness is considered to be an essential element for conversion to a plant-based substitute food.

The plant-based substitute food can be obtained mainly by mixing, emulsifying, or organizing food materials that do not contain animal-derived raw materials such as plant-based oils/fats and plant-based proteins. However, the substitute food mainly containing plant-based raw materials may be problematic in terms of flavor. Specifically, the substitute food may have a conspicuous flavor derived from a plant-based raw material, for example, an off-flavor such as bean odor, cereal odor, miscellaneous taste, or bitterness, which may be far different from that of the original animal food. Furthermore, it is difficult to reproduce the richness and thickness peculiar to the animal food only with the plant-based raw material, and the plant-based substitute food may have an unsatisfactory and unpalatable flavor as compared with the animal food. As described above, the elimination of the off-flavor of the plant-based substitute food and the impartment of the deliciousness are major issues, and the solution of these issues is essential for spread of the plant-based substitute food, and thus various studies have been made.

For example, Patent Document 1 discloses a method for producing an edible oil and/or fat composition including adding, to an edible oil and/or fat, 0.05 mass% or more and 13 mass% or less of a roasted oil obtained by roasting corn wet germ for oil extraction without pulverizing the corn wet germ, and a method for masking unpleasant flavors of plant-based proteins and the like including cooking with the edible oil and/or fat composition.

Further, Patent Document 2 discloses a flavor improving agent for a plant-based protein-containing composition, which contains a processed tomato product and masks an unpleasant odor caused by a plant-based protein.

Alternatively, Patent Document 3 discloses a starter for producing a soymilk-lactic acid fermented food which has reduced grassy smell, bitterness, and astringency peculiar to soybeans and which has mild sourness without addition of a specific sourness masking agent or the like, and a method for producing a soymilk-lactic acid fermented food using the starter.

Patent Document 4 discloses that, in a beverage containing from 1 to 650 ppm of tannin and having a pH of 5.0 or more, stimulative bitterness derived from tannin is reduced by blending 0.4 ppb or more of phenethyl alcohol.

In addition, due to an increase in health awareness and an increase in sports population, attention has been increasingly focused on foods and beverages containing a protein, and the number of products obtained by adding a protein to milk products and milk beverages for emphasis on functionality has increased. Milk proteins mainly composed of casein or whey protein are often used as proteins in these foods and beverages. However, when a large amount of milk protein is blended in a food or beverage, an off-flavor having an unpleasant odor or taste, which is known as a casein odor derived from casein and a whey odor derived from whey protein, is imparted to the food or beverage, and thus the food or beverage disadvantageously has impaired deliciousness. Therefore, there is an issue that high-protein foods and drinks using a milk protein have low palatability.

Meanwhile, collagen, which is a major protein of animal tissues, and collagen peptide, which is a degradation product thereof, are used in foods and beverages with the expectation of beauty and health functions, but collagen and collagen peptide have a peculiar unpleasant odor and bitterness, and it is necessary to suppress the unpleasant odor and bitterness for use thereof in foods and beverages.

In order to solve the above issues, various methods have been proposed for the purpose of masking off-flavors caused by milk protein, collagen or collagen peptide, including, for example, a method of adding ethyl decanoate to a food or beverage (Patent Document 7), a method of using an improving agent containing at least one selected from the group consisting of diphenyl oxide and cis-3-hexenol (Patent Document 8), a method of adding hydroxypropyl cellulose (Patent Document 9), a method of using chlorogenic acid (Patent Document 10), and a method of using inositol, fructooligosaccharide, cyclic oligosaccharide or high-intensity sweetener (Patent Document 11).

Meanwhile, in order to store a food for a long period of time or at room temperature, there is a method in which a food is sealed in an airtight container such as a bag, a can, or a bottle and heat-sterilized using a retort apparatus or the like. Retort foods produced by these methods are known to generate an unpleasant odor called retort odor, which is undesirable in terms of flavor, when they are sterilized under high-temperature and high-pressure conditions, and thus to have impaired quality. Various methods have been developed to suppress the retort odor. For example, there have been reported a method of adding chlorogenic acid, caffeic acid, and ferulic acid (Patent Document 12), a method of adding cyclodextrin (Patent Document 13), a method of adding cumin and eugenol (Patent Document 14), a method of adding curcuminoid and anethole (Patent Document 15), and the like.

Furthermore, unsaturated fatty acids containing a double bond, such as docosahexaenoic acid (DHA) and eicosapentaenoic acid (EPA), are sometimes contained in fish oils, algae, bacteria, filamentous fungi, and the like, and are known to be effective in preventing dementia while suppressing decline in brain function when ingested by humans. However, since unsaturated fatty acids have low oxidative stability, they tend to generate unpleasant odors typified by fish odors as a result of oxidative deterioration. In foods containing unsaturated fatty acids, antioxidants such as tocopherol (vitamin E) and ascorbyl palmitate (vitamin C palmitate) are often used for suppressing oxidative degradation. However, since a threshold value of the unpleasant odor generated due to oxidative degradation is very low and off-flavors are felt even by slight oxidative degradation, it is difficult to completely prevent the generation of the unpleasant odor only by using antioxidants.

Therefore, many methods for masking unpleasant odors associated with oxidative degradation of unsaturated fatty acids have been devised. For example, there are a method of adding high-intensity sweeteners (Patent Document 16), a method of adding ginger oil (Patent Document 17), a method of adding an extract of Momordica grosvenori (Patent Document 18), and a method of adding spices of Labiatae, Myrtaceae, and Lauraceae and extracts thereof (Patent Document 19).

### Prior Art Documents

### Patent Documents

Patent Document 1: WO 2018/186326
Patent Document 2: JP 2019-71851 A
Patent Document 3: JP 2019-165667 A
Patent Document 4: JP 2020-130107 A
Patent Document 5: WO 2015-153666
Patent Document 6: JP 2020-156343 A
Patent Document 7: JP 2006-197857 A
Patent Document 8: JP 2022-15356 A
Patent Document 9: WO 2020/171069
Patent Document 10: JP 2003-210119 A
Patent Document 11: JP 2018-143225 A
Patent Document 12: JP 2000-308477 A
Patent Document 13: JP S60-75266 A
Patent Document 14: JP 2006-81461 A
Patent Document 15: JP 2003-169644 A
Patent Document 16: JP 2021-78497 A
Patent Document 17: JP 6038641 B
Patent Document 18: JP 2012-223138 A
Patent Document 19: JP H07-236418 A

### Disclosure of the Invention

### Technical Problem

An object of the present invention is to improve flavor while masking various off-flavors in foods.

### Solution to Problem

Patent Documents 1 to 3 specialize in masking off-flavors of plant-based raw materials, but do not focus on improving flavors of plant-based substitute foods.

Patent Document 5 discloses that lactones such as 5-ethyl-4-hydroxy-2-methyl-3(2H)-furanone, butyrolactone, γ-octalactone, and δ-tetradecalactone were added to a meat replica, and that umami, sweetness, juiciness, and animal odor, which are felt as aftertaste when meat is chewed, were reproduced. However, it is difficult to sufficiently mask the off-flavors of plant-based raw materials only with lactones, and the flavors of the plant-based raw materials remain in the substitute foods.

Further, Patent Document 6 discloses a fermented seasoning composition containing 1500 ppm of isovaleric acid in terms of a liquid having a solids content of 2.0%, which is used for enhancing meaty taste, masking unpleasant flavors of plant-based proteins, or enhancing sweetness. However, the addition of a large amount of isovaleric acid to a food generates an unpleasant odor, and the food has a flavor far from deliciousness thereof, and thus there is a limit in masking the off-flavors derived from the vegetable raw materials.

As described above, a combination of active ingredients for imparting deliciousness while eliminating off-flavors of plant-based foods has not been systematically established. Furthermore, although masking of off-flavors and imparting of deliciousness have been reported for a single component, the effect obtained by a combination of components has not been confirmed.

In addition, the methods for improving strange flavors derived from milk protein, collagen, or collagen peptide, as proposed in Patent Documents 7 to 11, exhibit effects to some extent, but are not sufficiently satisfied by many consumers, and also have an issue of lacking versatility. Therefore, there is a need for a method for further improving the strange flavors of milk protein, collagen, and collagen peptide and for improving the flavor.

As described above, a combination of active ingredients for imparting deliciousness while eliminating off-flavors due to milk protein, collagen, or collagen peptide has not been systematically established. Furthermore, although masking of off-flavors and imparting of deliciousness have been reported for a single component, the effect obtained by a combination of components has not been confirmed.

Meanwhile, the methods for improving a retort odor, as proposed in Patent Documents 12 to 15, exhibit effects to some extent, but are not sufficiently satisfied by many consumers, and also have an issue of lacking versatility. Therefore, there is a need for a method for further improving the retort odor and improving the flavor.

As described above, a combination of active ingredients for imparting deliciousness while eliminating a retort odor has not been systematically established.

In addition, the methods for improving unpleasant odors typified by fish odors caused by oxidative deterioration of unsaturated fatty acids, as proposed in Patent Documents 16 to 19, exhibit effects to some extent, but are not sufficiently satisfied by many consumers, and also have an issue of lacking versatility. Therefore, there is a need for a method for further improving masking of a rancid fat odor and improving the flavor.

As described above, a combination of active ingredients for imparting deliciousness while masking rancid fat odors due to unsaturated fatty acids has not been systematically established. Furthermore, although masking of rancid fat odors and imparting of deliciousness have been reported for a single component, the effect obtained by a combination of components has not been confirmed.

As a result of intensive studies to solve the above issues, the present inventors have found that various off-flavors in foods are masked and the flavor is improved by using a composition containing lactones, isovaleric acid, and phenethyl alcohol at a ratio in a specific range, and have completed the present invention.

That is, the present invention includes the following inventions.
(1) A masking flavorant containing: isovaleric acid and/or phenethyl alcohol; and lactones, and having a weight ratio (lactones)/(isovaleric acid and phenethyl alcohol) of 0.1 or more and 1000 or less.
(2) The masking flavorant according to (1), wherein at least one selected from the group consisting of the isovaleric acid, the phenethyl alcohol and the lactones is a microbial fermentation product by (A) yeast and/or koji mold, or (B) yeast and/or koji mold and lactic acid bacteria.
(3) A food containing the masking flavorant described in (1) or (2), the food having a content of the lactones of 1 ppb or more on a weight basis.
(4) The food according to (3), which is free of an animal-derived raw material.
(5) The food according to (3), containing: an unsaturated fatty acid; and/or unsaturated fatty acid-containing oil and/or fat.
(6) The food according to (3), containing a powdered oil and/or fat of: an unsaturated fatty acid; and/or unsaturated fatty acid-containing oil and/or fat.
(7) A production method of a food, the production method including adding a masking flavorant, the masking flavorant containing: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis.
(8) The production method according to (7), including heat-sterilizing.
(9) The production method according to (7), wherein a protein is contained in an amount of 1 wt.% or more.
(10) A method for masking an off-flavor of a plant-based raw material in a food, the method including adding a masking flavorant to a food, the masking flavorant containing: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.
(11) The method according to (10), wherein the food is free of an animal raw material.
(12) A method for masking an off-flavor of an animal raw material in a food, the method including adding a masking flavorant to a food, the masking flavorant containing: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.
(13) A method for masking a retort odor in a heat-sterilized food, the method including adding a masking flavorant to a food, the masking flavorant containing: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.
(14) The method according to (13), wherein a protein is contained in an amount of 1 wt.% or more in the food.
(15) A method for masking a rancid fat odor in a food, the method including adding a masking flavorant to a food, the masking flavorant containing: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.
(16) The method according to (15), wherein an unsaturated fatty acid and/or unsaturated fatty acid-containing oil and/or fat is contained.
(17) The method according to (15), wherein a powdered oil and/or fat of: an unsaturated fatty acid; and/or unsaturated fatty acid-containing oil and/or fat is contained.

### Advantageous Effects of Invention

The present invention makes it possible to improve flavor while masking various off-flavors in foods.

### Description of Embodiments

The present invention will be described in detail below.

### Lactones

Examples of the lactone in the present invention include δ-hexalactone, δ-octalactone, δ-nonalactone, δ-decalactone, δ-undecalactone, δ-dodecalactone, δ-tridecalactone, δ-tetradecalactone, and δ-hexadecalactone; γ-hexalactone, γ-octalactone, γ-nonalactone, γ-decalactone, γ-undecalactone, and γ-dodecalactone, and a lactone having 10 or more carbon atoms is preferred. A weight of the lactone in the present invention refers to a total amount of the above-described lactones.

### (Lactones)/(isovaleric acid and phenethyl alcohol) weight ratio

The ratio, (lactones)/(isovaleric acid and phenethyl alcohol), in the present invention is a ratio calculated from weights of lactones, isovaleric acid, and phenethyl alcohol. The expression "(isovaleric acid and phenethyl alcohol)" refers to a total amount of isovaleric acid and phenethyl alcohol.

The weights of lactones, isovaleric acid, and phenethyl alcohol are quantitatively analyzed by gas chromatography-mass spectrometry (GC-MS).

The gas chromatography-mass spectrometry (GC-MS) was performed under the following conditions.

### Analysis conditions for GC-MS

Column: DB-WAX (Agilent J&W, length: 60 m, internal diameter: 0.25 mm, film thickness: 0.25 µm)
Oven: 50°C (not retained) -3°C/min-250°C (retained for 80 min)
Carrier gas: He, G1 grade injection volume
Injection volume: 1 µl
Mass spectrometer ionization voltage: 70 eV
Ion source temperature: 230°C

### (Methods for producing isovaleric acid, phenethyl alcohol and lactones)

The methods for producing isovaleric acid, phenethyl alcohol and lactones is not particularly limited as long as they are ordinary methods, and examples thereof include production by synthesis, fermentation and extraction from natural products.

### (Plant-based raw material)

The plant-based raw material in the present invention refers to a raw material derived from a plant. Specific examples of the vegetable raw material include hydrolysates, emulsions, powders, and fractions obtained from beans, nuts, grains and the like.

### (Animal raw material)

The animal raw material in the present invention is a raw material derived from an animal, and specific examples thereof include cow milk, beef, beef tallow, pork meat, pork fat, chicken meat, chicken oil, fish meat, fish powder, and insect powder, and more preferable examples thereof include milk protein, collagen, and collagen peptide. The milk protein may be derived from any source, for example, bovine or goat. More specifically, in the case of being derived from milk, the milk protein is not particularly limited as long as it contains casein or whey protein, including total milk protein (TMP), milk protein concentrate (MPC), milk protein isolate (MPI), micella casein isolate (MCI), micella casein concentrate (MCC), lennet casein, caseinates (sodium caseinate, potassium caseinate, calcium caseinate, magnesium caseinate, and the like), acid casein, alkali casein, whey protein concentrate (WPC), whey protein isolate (WPI), whey powder, skimmed milk powder, skimmed concentrated milk, whole fat milk powder, butter milk powder, and butter milk. In addition, casein or whey protein obtained by precision culture of genetically modified yeast may also be used. The collagen is not particularly limited as long as it is a protein contained in a site such as skin, bone or cartilage of an animal such as pig, bird or fish, or collagen obtained by precision culture of a genetically modified microorganism. The collagen peptide is not particularly limited as long as it is a protein or peptide obtained by hydrolyzing collagen and lowering its molecular weight. The milk protein, collagen, or collagen peptide is preferably contained in a final food in an amount of 0.1 wt.% or more.

### (Retort odor)

The retort odor in the present invention refers to all unpleasant odors generated when a food is subjected to heat sterilization treatment.

### (Rancid fat odor)

The rancid fat odor in the present invention is not particularly limited as long as it is an odor due to a carbonyl compound which is generated when unsaturated fatty acids are oxidized, and examples thereof include fish odor, grassy smell, metallic smell, fishy odor, and soapy odor.

### (Masking flavorant)

The masking flavorant in the present invention is a composition for improving, ameliorating or masking a flavor in a food, and contains a perfume or a microbial fermentation product.

### (Microbial fermentation product)

The microbial fermentation product of the present invention is a fermentation product by (A) yeast and/or koji mold, or (B) yeast and/or koji mold and lactic acid bacteria, preferably (C) yeast or yeast and lactic acid bacteria.

Specific examples of the lactic acid bacteria include Lactobacillus bacteria such as Lactobacillus brevis (L. brevis), Lactobacillus acidophilus (L. acidophilus), Lactobacillus casei (L. casei), Lactobacillus paracasei (L. paracasei), Lactobacillus gasseri (L. gasseri), Lactobacillus reuteri (L. reuteri), Lactobacillus delbruekii ssp. bulgaricus (L. delbruekii ssp. bulgaricus), Lactobacillus plantarum (L. plantarum), Lactobacillus buchneri (L. buchneri), Lactobacillus rhamnosus (L. rhamnosus), and Lactobacillus helveticus (L. helveticus); Pediococcus bacteria such as Pediococcus acidilactici (P. acidilactici) and Pediococcus pentosaceus (P. pentosaceus); Streptococcus bacteria such as Streptococcus thermophilus; Leuconostoc bacteria such as Leuconostoc mesenteroides; and Lactococcus bacteria such as Lactococcus lactis (Lc. lactis), Lactococcus lactis ssp. lactis (Lc. lactis ssp. lactis), Lactococcus lactis ssp. cremoris (Lc. lactis ssp. cremoris), and Lactococcus lactis subsp. lactis biovar diacetylactis.

In the present invention, yeasts such as Saccharomyces cerevisiae, Saccharomyces bayanus, Saccharomyces sake, Saccharomyces beticus, Schizosaccharomyces pombe, Kluyveromyces lactis, Kluyveromyces marxianus, Debaryomyces hansenii, and Yarrowia lipolytica can be used.

In the present invention, koji molds such as Aspergillus oryzae, Aspergillus sojae, Aspergillus kawachii, Aspergillus shirousamii, Aspergillus luchuensis, Aspergillus awamori, and Aspergillus saitoi can be used.

Typical and non-limiting production examples of the microbial fermentation product will be given below.

Plant-based milk such as soymilk, almond milk or oat milk is fermented with yeast and/or koji mold. According to need, lactic acid bacteria are added to carry out fermentation. Lactic acid bacterium fermentation may be carried out simultaneously with yeast and/or koji mold fermentation, or lactic acid fermentation may be carried out in advance and then yeast and/or koji mold fermentation may be carried out. The fermentation method is not particularly limited, but aerobic fermentation is preferred when yeast and/or koji mold are/is used. After completion of the fermentation, according to need, an acid such as hydrochloric acid, citric acid, or lactic acid is added to adjust the pH to 4.0 or less, and the mixture is heated to 60°C or higher to obtain a microbial fermentation product.

According to need, the microbial fermentation product may be subjected to concentration processing to increase the concentrations of the lactones, isovaleric acid and phenethyl alcohol to predetermined concentrations. If necessary, the microbial fermentation product may be used through extraction of an oil and/or fat fraction. In addition, a composition containing at least an edible lipid source or protein source, instead of the plant-based milk, may be used. The edible fat source is not particularly limited as long as it contains a lipid and can be eaten by humans, and examples thereof include vegetable oils/fats such as soybean oil, rapeseed oil, rice oil, corn oil, palm oil, safflower oil, coconut oil, sesame oil, cottonseed oil, sunflower oil, olive oil, and evening primrose oil, oils/fats extracted from algae and Euglena, and free fatty acids such as stearic acid, palmitic acid, myristic acid, lauric acid, capric acid, oleic acid, palmitoleic acid, docosahexaenoic acid, eicosapentaenoic acid, arachidonic acid, linoleic acid, γ-linolenic acid, α-linolenic acid, and ricinoleic acid. The edible protein source is not particularly limited as long as it contains a protein and can be eaten by humans, and examples thereof include those containing soybean protein, pea protein, almond protein, mung bean protein, rice protein, potato protein, soybean peptide, yeast extract, collagen, collagen peptide, milk protein and the like, and the nature thereof is not particularly limited.

### (Application/masking of plant-based raw material)

The masking of off-flavors of plant-based raw materials and the flavor can be improved and ameliorated by using, in foods, the flavorant containing lactones and isovaleric acid and/or phenethyl alcohol in a predetermined ratio in the present invention. The type of the food is not particularly limited as long as the food contains a plant-based raw material. Examples of the food include plant-based milk substitute materials such as plant-based milk, plant-based yogurt, plant-based cream, plant-based cheese, margarine, and shortening; plant-based meat fat substitute materials such as plant-based steak, plant-based hamburg steak, stir-fried plant-based meat, plant-based hamburger, plant-based fried chicken, plant-based tonkatsu (pork cutlet), plant-based ham, plant-based bacon, plant-based jiaozi, plant-based char siu, and plant-based croquette; plant-based egg substitute materials such as plant-based rolled omelet, plant-based scrambled egg, plant-based omelet, plant-based meringue, plant-based steamed egg custard, and plant-based quiche; plant-based substitute materials for fish and shellfish such as plant-based fish sausage, plant-based tuna, plant-based steamed fish paste, plant-based shrimp, plant-based octopus, plant-based cuttlefish, plant-based medium fatty tuna, plant-based scallops, plant-based crabs, plant-based crab butter, plant-based mentaiko (spicy cod roe), and plant-based white fish; plant-based protein materials such as powdery plant-based protein, granular plant-based protein, and fibrous plant-based protein; breads such as sliced bread, croissant, brioche, panini, focaccia, white bread, pretzel, English muffin, scone, pirozhki, bagel, butter roll, cinnamon roll, buns, donut, muffin, naan, bean jam bread, cornet, cream filled bun, melon bread, curry bread, pizza bread, pizza pie, and meat pie; Western confectioneries such as sponge cake, roll cake, pound cake, cheese cake, baumkuchen, cream puff, éclair, Danish pastry, tart, mille-feuille, apple pie, waffle, pancake, crepe, pudding, custard, and tiramisu; confectioneries such as candy, chocolate, chewing gum, biscuit, and snack; milk products such as milk, yoghurt, fresh cream, whipped cream, cheese, cheese food, cheese material, butter, processed milk products, cream stew, and gratin; meat products such as steak, hamburg steak, hamburger, fried chicken, ham, bacon, jiaozi, char siu, croquette, sausage, meat bun, spring roll, dumpling (shumai), and beef stew; egg products such as rolled omelet, scrambled egg, omelet, meringue, steamed egg custard, and quiche; processed fish and shellfish products such as fish sausage, tuna, steamed fish paste, and clam chowder; noodles such as Chinese noodle, Japanese noodle, buckwheat noodle, fried noodle, pasta, pho, rice vermicelli, rice noodle, and couscous; and seasonings such as mayonnaise, ketchup, dressing, soy sauce, ponzu vinegar, noodle sauce base, white soup stock, bean paste (miso), malted rice (shiokoji), Worcestershire sauce, oyster sauce, pork cutlet sauce, tomato sauce, chili sauce, barbecue sauce, Tabasco, pizza sauce, clear (consommé) soup stock powder, Japanese stock powder, Chinese soup stock powder, chicken stock powder, kimchi base, curry paste, curry powder, curry roux, hashed beef roux, chili bean sauce, sweet soy sauce, gochujang, and mustard.

Here, the term "plant-based" does not mean that no animal raw material is contained at all, and specifically means that the animal-derived raw material accounts for less than 50% in the total amount.

### (Application/masking of animal raw material)

The masking of off-flavors of animal raw materials and the flavor can be improved and ameliorated by using the flavorant containing lactones and isovaleric acid and/or phenethyl alcohol in a predetermined ratio in the present invention, in foods containing an animal raw material such as milk protein, collagen, or collagen peptide. The type of the food is not particularly limited as long as the food contains milk protein, collagen, or collagen peptide. Examples of the food include milk products such as milk, milk beverage, yoghurt, fresh cream, whipped cream, cheese, cheese food, processed cheese product, butter, margarine, shortening, processed milk product, cream stew, and gratin; meat products such as steak, hamburg steak, hamburger, fried chicken, tonkatsu (pork cutlet), ham, sausage, bacon, jiaozi, char siu, croquette, meat bun, spring roll, dumpling (shumai), and beef stew; processed fish and shellfish products such as fish sausage, fish ham, tuna, steamed fish paste, and clam chowder; breads such as sliced bread, croissant, brioche, panini, focaccia, white bread, pretzel, English muffin, scone, pirozhki, bagel, butter roll, cinnamon roll, buns, donut, muffin, naan, bean jam bread, cornet, cream filled bun, melon bread, curry bread, pizza bread, pizza pie, and meat pie; Western confectioneries such as sponge cake, roll cake, pound cake, cheese cake, baumkuchen, cream puff, éclair, Danish pastry, tart, mille-feuille, apple pie, waffle, pancake, crepe, pudding, custard, and tiramisu; confectioneries such as candy, chocolate, chewing gum, biscuit, and snack; noodles such as Chinese noodle, Japanese noodle, buckwheat noodle, fried noodle, pasta, pho, rice vermicelli, rice noodle, and couscous; and seasonings such as mayonnaise, ketchup, dressing, soy sauce, ponzu vinegar, noodle sauce base, white soup stock, bean paste (miso), malted rice (shiokoji), Worcestershire sauce, oyster sauce, pork cutlet sauce, tomato sauce, chili sauce, barbecue sauce, Tabasco, pizza sauce, clear (consommé) soup stock powder, Japanese stock powder, Chinese soup stock powder, chicken stock powder, kimchi base, curry paste, curry powder, curry roux, hashed beef roux, chili bean sauce, sweet soy sauce, gochujang, and mustard.

### (Application/masking of retort odor)

Also, the retort odor masking and the flavor can be improved and ameliorated by using, in protein-containing foods, the masking flavorant containing lactones and isovaleric acid and/or phenethyl alcohol in a predetermined ratio in the present invention. The type of the food is not particularly limited, but a food containing a protein is preferable, and a food containing 0.1 wt.% or more, preferably 1 wt.% or more of a protein can suitably exhibit the retort odor masking effect of the present invention. Examples of the food include milk products such as milk, milk beverage, yoghurt, fresh cream, whipped cream, cheese, cheese food, processed cheese product, butter, shortening, processed milk product, cream stew, and gratin; meat products such as steak, hamburg steak, hamburger, fried chicken, tonkatsu (pork cutlet), ham, sausage, bacon, jiaozi, char siu, croquette, meat bun, spring roll, dumpling (shumai), and beef stew; processed fish and shellfish products such as fish sausage, fish ham, tuna, steamed fish paste, and clam chowder; plant-based milk substitute materials such as plant-based milk, plant-based yogurt, plant-based cream, plant-based cheese, margarine, and shortening; plant-based meat fat substitute materials such as plant-based steak, plant-based hamburg steak, stir-fried plant-based meat, plant-based hamburger, plant-based fried chicken, plant-based tonkatsu (pork cutlet), plant-based ham, plant-based bacon, plant-based jiaozi, plant-based char siu, and plant-based croquette; plant-based egg substitute materials such as plant-based rolled omelet, plant-based scrambled egg, plant-based omelet, plant-based meringue, plant-based steamed egg custard, and plant-based quiche; plant-based substitute materials for fish and shellfish such as plant-based fish sausage, plant-based tuna, plant-based steamed fish paste, plant-based shrimp, plant-based octopus, plant-based cuttlefish, plant-based medium fatty tuna, plant-based scallops, plant-based crabs, plant-based crab butter, plant-based mentaiko (spicy cod roe), and plant-based white fish; plant-based protein materials such as powdery plant-based protein, granular plant-based protein, and fibrous plant-based protein; nursing care foods and highly nutritious foods such as nutrient, liquid food, and nutritional supplement; protein supplements such as protein powder, protein drink, high protein jelly, protein bar, and high protein yogurt; and seasonings such as mayonnaise, ketchup, dressing, soy sauce, ponzu, noodle sauce base, white soup stock, bean paste (miso), malted rice (shiokoji), Worcestershire sauce, oyster sauce, pork cutlet sauce, tomato sauce, chili sauce, barbecue sauce, Tabasco, pizza sauce, clear (consommé) soup stock powder, Japanese stock powder, Chinese soup stock powder, chicken stock powder, kimchi base, curry paste, curry powder, curry roux, hashed beef roux, chili bean sauce, sweet soy sauce, gochujang, and mustard.

### (Application/masking of rancid fat odor)

Also, the rancid fat odor masking and the flavor can be improved and ameliorated by using, in unsaturated fatty acids or unsaturated fatty acid-containing oils/fats, the flavorant containing lactones and isovaleric acid and/or phenethyl alcohol in a predetermined ratio in the present invention. The type of the food is not particularly limited as long as the food contains an unsaturated fatty acid or an unsaturated fatty acid-containing oil and/or fat in an amount of preferably 0.001 wt.% or more, more preferably 0.01 wt.% or more. Examples of the food include milk products such as milk, yoghurt, fresh cream, whipped cream, cheese, cheese food, cheese material, butter, processed milk products, cream stew, and gratin; meat products such as steak, hamburg steak, hamburger, fried chicken, ham, bacon, jiaozi, char siu, croquette, sausage, meat bun, spring roll, dumpling (shumai), and beef stew; processed fish and shellfish products such as fish sausage, tuna, steamed fish paste, and clam chowder; oils/fats or processed oils/fat products such as edible oil and/or fat, flavored edible oil, edible blended oil, powdered oil and/or fat, and processed oil and/or fat food; breads such as sliced bread, croissant, brioche, panini, focaccia, white bread, pretzel, English muffin, scone, pirozhki, bagel, butter roll, cinnamon roll, buns, donut, muffin, naan, bean jam bread, cornet, cream filled bun, melon bread, curry bread, pizza bread, pizza pie, and meat pie; Western confectioneries such as sponge cake, roll cake, pound cake, cheese cake, baumkuchen, cream puff, éclair, Danish pastry, tart, mille-feuille, apple pie, waffle, pancake, crepe, pudding, custard, and tiramisu; confectioneries such as candy, chocolate, chewing gum, biscuit, and snack; noodles such as Chinese noodle, Japanese noodle, buckwheat noodle, fried noodle, pasta, pho, rice vermicelli, rice noodle, and couscous; plant-based milk substitute materials such as plant-based milk, plant-based yogurt, plant-based cream, plant-based cheese, margarine, and shortening; plant-based meat fat substitute materials such as plant-based steak, plant-based hamburg steak, stir-fried plant-based meat, plant-based hamburger, plant-based fried chicken, plant-based tonkatsu (pork cutlet), plant-based ham, plant-based bacon, plant-based jiaozi, plant-based char siu, and plant-based croquette; plant-based egg substitute materials such as plant-based rolled omelet, plant-based scrambled egg, plant-based omelet, plant-based meringue, plant-based steamed egg custard, and plant-based quiche; plant-based substitute materials for fish and shellfish such as plant-based fish sausage, plant-based tuna, plant-based steamed fish paste, plant-based shrimp, plant-based octopus, plant-based cuttlefish, plant-based medium fatty tuna, plant-based scallops, plant-based crabs, plant-based crab butter, plant-based mentaiko (spicy cod roe), and plant-based white fish; plant-based protein materials such as powdery plant-based protein, granular plant-based protein, and fibrous plant-based protein; nursing care foods and highly nutritious foods such as nutrient, liquid food, and nutritional supplement; protein supplements such as protein powder, protein drink, high protein jelly, protein bar, and high protein yogurt; and seasonings such as mayonnaise, ketchup, dressing, soy sauce, ponzu, noodle sauce base, white soup stock, bean paste (miso), malted rice (shiokoji), Worcestershire sauce, oyster sauce, pork cutlet sauce, tomato sauce, chili sauce, barbecue sauce, Tabasco, pizza sauce, clear (consommé) soup stock powder, Japanese stock powder, Chinese soup stock powder, chicken stock powder, kimchi base, curry paste, curry powder, curry roux, hashed beef roux, chili bean sauce, sweet soy sauce, gochujang, and mustard.

A content of the lactones in foods containing the flavorant in the present invention is preferably 1 ppb or more on a weight basis. The content of the isovaleric acid and/or phenethyl alcohol in foods containing the flavorant in the present invention is preferably 10 ppt or more on a weight basis. A content of the isovaleric acid is preferably 1 ppm or less per 1 wt.% of the protein contained in foods. Isovaleric acid alone, when being present at a high concentration, emits an unpleasant odor peculiar to isovaleric acid. However, it has been found, in the present invention, that an unpleasant odor derived from isovaleric acid can be suppressed by combining the isovaleric acid with the lactones. Therefore, in the flavorant of the present invention, even when the isovaleric acid is present at a high concentration at which an unpleasant odor of isovaleric acid is usually generated, the combination thereof with the lactones can suppress generation of the unpleasant odor and mask more off-flavors, by virtue of a synergistic effect obtained by the lactones and the isovaleric acid.

In the production of each food, other necessary food raw materials (fruit juice, pulp, vegetables, sugars, oils/fats, dairy products, grain flours, starches, cacao mass, bird, beast and fish meat products, and the like) and food additives (minerals, vitamins, emulsifiers, thickening stabilizers, acidulants, perfumes, and the like) can be appropriately used.

### (Production method of each food)

The production method of each food is not particularly limited as long as it is a general method for producing each food. For example, plant-based milk substitute materials can be prepared by mixing vegetable oils/fats, flavorants for plant-based raw materials, plant-based proteins, water and emulsifiers, heat-sterilizing the mixture at 80°C while stirring and mixing, homogenizing the heat-sterilized mixture at a homogenizing pressure of 40 Kg/cm2, and refrigerating the homogenized product. The plant-based meat fat substitute material can be prepared by mixing a plant-based protein, a vegetable oil and/or fat, starch, water, a seasoning and the like, heat-sterilizing the mixture at 80°C while stirring and mixing, and refrigerating the heat-sterilized mixture.

For example, a milk beverage can be prepared by mixing milk protein, skimmed milk powder, a vegetable oil and/or fat, water, an emulsifier and the like, homogenizing the mixture at a homogenizing pressure of 100 Kg/cm², heat-sterilizing the mixture at 141°C, cooling the mixture to 80°C or lower, homogenizing the cooled mixture at a homogenizing pressure of 50 Kg/cm², and refrigerating the homogenized product.

Meanwhile, for example, a liquid food can be prepared by mixing powdery soybean protein, milk protein, a vegetable oil and/or fat, a dextrin, a mineral, water, an emulsifier, a cellulose and the like, homogenizing the mixture at a homogenizing pressure of 100 Kg/cm², and retort heating the homogenized product at 121°C for 30 minutes.

### (Unsaturated fatty acid and/or unsaturated fatty acid-containing oil and/or fat)

The unsaturated fatty acid in the present invention is not particularly limited as long as it is a fatty acid containing a double bond, and examples thereof include docosahexaenoic acid (DHA), erucic acid, eicosapentaenoic acid (EPA), eicosenoic acid, arachidonic acid, γ-linolenic acid, α-linolenic acid, linoleic acid, conjugated linoleic acid, oleic acid, vaccenic acid, elaidic acid, and palmitoleic acid. Examples of the unsaturated fatty acid-containing oil and/or fat is not particularly limited as long as it is an oil and/or fat containing an unsaturated fatty acid, and examples thereof include vegetable oils/fats such as soybean oil, rapeseed oil, rice oil, corn oil, palm oil, safflower oil, coconut oil, sesame oil, cottonseed oil, sunflower oil, olive oil, and evening primrose oil, oils/fats extracted from algae and Euglena, and fish oils, beef tallow, pork fat, and chicken oil extracted and/or purified from sardine, pacific saury, tuna, and the like.

Further, for example, in the case of powdered oils/fats, an oil and/or fat, an emulsifier, a protein material and other raw materials are prepared. First, a water-soluble raw material is dissolved in water, and an aqueous phase is prepared. In the case of the oil and/or fat, a necessary oil-soluble substance, if present, is added into the oil and/or fat, which is then used as an oil phase. Depending on the fatty acid or the like constituting also the oil phase, warming is preferred, and, in many cases, preparation is carried out at a temperature not lower than a melting point thereof. The oil phase is mixed with the aqueous phase, and an oil-in-water emulsion is obtained through emulsification treatment. The oil-in-water emulsion is dried, and a powdered oil and/or fat is obtained. As a method for drying and powdering an oil-in-water emulsion, a generally known spray drying method, vacuum freeze drying method, vacuum drying method or the like can be used. Among these, a spray-dried powdered oil and/or fat obtained by a spray drying method are preferred. In the case of spray drying, a disk-type atomizer system or spray drying using a one-fluid or two-fluid nozzle can be used. Examples of the drying conditions include a hot air temperature of from 100 to 200°C and an exhaust air temperature of from 50 to 100°C.

### Examples

Hereinafter, the present invention will be described in more detail with reference to Examples. Note that, the numbers in Examples are expressed on a weight basis unless otherwise specified.

### (Production Example 1)

The yeast Kluyveromyces marxianus was added to soymilk cream (available from Fuji Oil Co., Ltd., solid content: 18.0%, protein: 5.6%, lipid: 12.3%), followed by aerobic fermentation at 28°C for 5 days. After completion of the fermentation, hydrochloric acid was added to adjust the pH to 3.0 or less; the mixture was heated at 80°C for 20 minutes; concentration processing and oil and/or fat fraction extraction were performed; and thus a microbial fermentation product containing lactones, isovaleric acid and phenethyl alcohol was obtained.

### (Production Example 2)

The lactic acid bacterium Lactobacillus plantarum (L. plantarum) and the yeast Saccharomyces cerevisiae were simultaneously added to soymilk cream (available from Fuji Oil Co., Ltd., solid content: 18.0%, protein: 5.6%, lipid: 12.3%), followed by aerobic fermentation. After completion of the fermentation, hydrochloric acid was added to adjust the pH to 3.0 or less; the mixture was heated at 80°C for 20 minutes; concentration processing and oil and/or fat fraction extraction were performed; and thus a microbial fermentation product containing lactones, isovaleric acid and phenethyl alcohol was obtained.

### (Production Example 3)

The lactic acid bacterium Lactobacillus plantarum (L. plantarum) and the koji mold Aspergillus oryzae were simultaneously added to soymilk cream (available from Fuji Oil Co., Ltd., solid content: 18.0%, protein: 5.6%, lipid: 12.3%), followed by aerobic fermentation. After completion of the fermentation, hydrochloric acid was added to adjust the pH to 3.0 or less; the mixture was heated at 80°C for 20 minutes; concentration processing and oil and/or fat fraction extraction were performed; and thus a microbial fermentation product containing lactones, isovaleric acid and phenethyl alcohol was obtained.

### (Production Example 4)

The yeast Saccharomyces bayanus was added to an emulsion prepared by mixing 12.3 wt.% of soybean oil, 6.2 wt.% of powdery soybean protein (available from Fuji Oil Co., Ltd.), 0.5 wt.% of sucrose, and 81.0 wt.% of water followed by aerobic fermentation. After completion of the fermentation, hydrochloric acid was added to adjust the pH to 3.0 or less; the mixture was heated at 80°C for 20 minutes; concentration processing and oil and/or fat fraction extraction were performed; and thus a microbial fermentation product containing lactones, isovaleric acid and phenethyl alcohol was obtained.

### (Production Example 5)

A composition containing lactones, isovaleric acid and phenethyl alcohol was obtained by adding single perfumes as lactones, isovaleric acid and phenethyl alcohol to soymilk cream (available from Fuji Oil Co., Ltd., solid content: 18.0%, protein: 5.6%, lipid: 12.3%) at a predetermined proportion, and performing concentration processing and oil and/or fat fraction extraction.

### (Preparation of processed soymilk)

A mixture containing 10 wt.% of processed soymilk powder and 90 wt.% of water was prepared, and a composition containing lactones and isovaleric acid and/or phenethyl alcohol at concentrations as presented in Tables 1 to 7 was added thereto. The mixture was heated to 80°C while being stirred and mixed, followed by refrigeration to obtain a processed soymilk containing 6.5 wt.% of soybean protein. Sensory evaluation was performed. A processed soymilk was obtained by the same method using a microbial fermentation product containing lactones, isovaleric acid and phenethyl alcohol at concentrations as presented in Table 8, and sensory evaluation was performed. As the lactones, a combination of different lactones can be used.

### (Sensory evaluation)

The sensory evaluation was performed on 10 trained panelists, and the plant-based raw material masking effect, the strange flavor, the richness or thickness, and the overall evaluation were evaluated on a 5-point scale from 1 point to 5 points, and the average value was calculated. The plant-based raw material masking effect represents a masking effect when the masking effect without addition of any composition containing a microbial fermentation product and lactones, isovaleric acid and phenethyl alcohol was regarded as 1 point, and indicated that a higher masking effect was attained as the score became higher. For the strange flavor, a lower score indicated that off-flavors other than that from the plant-based raw material, specifically, isovaleric acid odor, rose-like odor derived from phenethyl alcohol, and lactone odor were stronger. The richness or thickness represents richness or thickness when the richness or thickness without addition of any composition containing a microbial fermentation product and lactones, isovaleric acid and phenethyl alcohol was regarded as 1 point, and indicated that a higher richness or thickness was attained as the score became higher. The overall evaluation represents an overall evaluation of deliciousness of the food set on the basis of the evaluation of the plant-based raw material masking effect, the strange flavor, and the richness or thickness, and indicated that the food was highly evaluated as the score became higher, with the acceptability standard being 3 points or more. The numerical values of the plant-based raw material masking effect, the strange flavor, the richness or thickness, and the overall evaluation are described as 1 when the average values are from 1.0 to 1.4, 2 when the average values are from 1.5 to 2.4, 3 when the average values are from 2.5 to 3.4, 4 when the average values are from 3.5 to 4.4, and 5 when the average values are from 4.5 to 5.0.

### Method for producing plant-based raw material masking flavorant mainly containing perfume (Examples 1 to 5)

| Table 1 | Example 1 | Example 2 | Example 3 | Example 4 | Example 5 |
|---|---|---|---|---|---|
| Isovaleric acid (ppb) | 900 | 900 | 900 | 900 | 900 |
| Phenethyl alcohol (ppb) | 100 | 100 | 100 | 100 | 100 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 1 | 1 | 1 | 1 | 1 |
| Plant-based raw material masking effect | 4 | 4 | 4 | 4 | 4 |
| Strange flavor | 3 | 3 | 3 | 4 | 4 |
| Richness or thickness | 4 | 4 | 4 | 4 | 4 |
| Overall evaluation | 3 | 3 | 3 | 4 | 4 |

### Method for producing plant-based raw material masking flavorant mainly containing perfume (Implementations 6 to 9)

| Table 2 | Example 6 | Example 7 | Example 8 | Example 9 |
|---|---|---|---|---|
| Isovaleric acid (ppb) | 900 | 900 | 900 | 900 |
| Phenethyl alcohol (ppb) | 100 | 100 | 100 | 100 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 1 | 1 | 1 | 1 |
| Plant-based raw material masking effect | 4 | 4 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing plant-based raw material masking flavorant mainly containing perfume (Examples 10 to 15)

| Table 3 | Example 10 | Example 11 | Example 12 | Example 13 | Example 14 | Example 15 |
|---|---|---|---|---|---|---|
| Isovaleric acid (ppb) | 900 | 900 | 900 | 900 | 900 | 900 |
| Phenethyl alcohol (ppb) | 100 | 100 | 100 | 100 | 100 | 100 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 1 | 1 | 1 | 1 | 1 | 1 |
| Plant-based raw material masking effect | 4 | 4 | 4 | 4 | 4 | 4 |
| Strange flavor | 3 | 3 | 3 | 3 | 4 | 4 |
| Richness or thickness | 3 | 3 | 3 | 4 | 4 | 4 |
| Overall evaluation | 3 | 3 | 3 | 3 | 4 | 4 |

### Method for producing plant-based raw material masking flavorant mainly containing perfume (Examples 16 to 20)

| Table 4 | Example 16 | Example 17 | Example 18 | Example 19 | Example 20 |
|---|---|---|---|---|---|
| Isovaleric acid (ppb) | 5 | 5 | 5 | 5 | 5 |
| Phenethyl alcohol (ppb) | 5 | 5 | 5 | 5 | 5 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 100 | 100 | 100 | 100 | 100 |
| Plant-based raw material masking effect | 3 | 3 | 3 | 4 | 4 |
| Strange flavor | 3 | 3 | 3 | 4 | 4 |
| Richness or thickness | 4 | 4 | 4 | 4 | 4 |
| Overall evaluation | 3 | 3 | 3 | 4 | 4 |

### Method for producing plant-based raw material masking flavorant mainly containing perfume (Examples 21 to 24)

| Table 5 | Example 21 | Example 22 | Example 23 | Example 24 |
|---|---|---|---|---|
| Isovaleric acid (ppb) | 5 | 5 | 5 | 5 |
| Phenethyl alcohol (ppb) | 5 | 5 | 5 | 5 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 100 | 100 | 100 | 100 |
| Plant-based raw material masking effect | 4 | 4 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing plant-based raw material masking flavorant mainly containing perfume (Examples 25 to 30)

| Table 6 | Example 25 | Example 26 | Example 27 | Example 28 | Example 29 | Example 30 |
|---|---|---|---|---|---|---|
| Isovaleric acid (ppb) | 5 | 5 | 5 | 5 | 5 | 5 |
| Phenethyl alcohol (ppb) | 5 | 5 | 5 | 5 | 5 | 5 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 100 | 100 | 100 | 100 | 100 | 100 |
| Plant-based raw material masking effect | 3 | 3 | 3 | 4 | 4 | 4 |
| Strange flavor | 3 | 3 | 3 | 3 | 4 | 4 |
| Richness or thickness | 3 | 3 | 3 | 4 | 4 | 4 |
| Overall evaluation | 3 | 3 | 3 | 3 | 4 | 4 |

The plant-based raw material masking flavorants exhibited the plant-based raw material masking effect due to the fact that they contained a predetermined proportion of lactone regardless of the type of lactone.

### Method for producing plant-based raw material masking flavorant mainly containing perfume (Examples 31 to 41 and Comparative Examples 1 to 7)

| Table 7 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Comparative Example 1 | 25 | 300 | 200 | 0.05 | 3 | 1 | 3 | 2 |
| Comparative Example 2 | 2.5 | 30 | 20 | 0.05 | 2 | 3 | 2 | 2 |
| Comparative Example 3 | 5 | 60 | 0 | 0.08 | 2 | 2 | 3 | 2 |
| Comparative Example 4 | 1 | 12 | 0 | 0.08 | 2 | 3 | 1 | 2 |
| Comparative Example 5 | 10 | 0 | 120 | 0.08 | 3 | 2 | 2 | 2 |
| Comparative Example 6 | 1 | 0 | 12 | 0.08 | 2 | 4 | 1 | 2 |
| Example 31 | 10 | 60 | 0 | 0.17 | 3 | 3 | 3 | 3 |
| Example 32 | 10 | 0 | 60 | 0.17 | 3 | 3 | 2 | 3 |
| Example 33 | 10 | 30 | 30 | 0.17 | 3 | 3 | 3 | 3 |
| Example 34 | 2500 | 5000 | 50 | 0.5 | 4 | 3 | 4 | 3 |
| Example 35 | 50 | 60 | 40 | 0.5 | 3 | 3 | 3 | 3 |
| Example 36 | 100 | 60 | 40 | 1.0 | 3 | 4 | 3 | 4 |
| Example 37 | 240 | 15 | 9 | 10 | 3 | 4 | 4 | 4 |
| Example 38 | 1000 | 90 | 40 | 10 | 4 | 4 | 4 | 4 |
| Example 39 | 2500 | 15 | 10 | 100 | 4 | 4 | 4 | 4 |
| Example 40 | 4000 | 5 | 3 | 500 | 3 | 3 | 4 | 3 |
| Example 41 | 8000 | 5 | 3 | 1000 | 3 | 3 | 4 | 3 |
| Comparative Example 7 | 16000 | 5 | 3 | 2000 | 3 | 1 | 3 | 2 |

The animal raw material masking flavorants exhibited the plant-based raw material masking effect due to the fact that, even when a combination of lactones were used, they contained the lactones at a predetermined proportion.

### Method for producing plant-based raw material masking flavorant mainly containing perfume or microbial fermentation product (Examples 42 to 47)

| Table 8 | Lactones (ppb) | Isovaleric acid (ppb) | Phenethyl alcohol (ppb) | (Lactones)/ (isovaleric acid and phenethyl alcohol) | Microbial fermentation product | Use of yeast | Use of koji mold | Use of lactic acid bacteria | Plant-based raw material masking effect | Strange flavor | Richness or thickness | Overall evaluation |
|---|---|---|---|---|---|---|---|---|---|---|---|---|
| Example 42 | 5 | 30 | 20 | 0.1 | No | No | No | No | 3 | 3 | 3 | 3 |
| Example 43 | 5 | 30 | 20 | 0.1 | Yes | Yes | No | Yes | 4 | 3 | 3 | 4 |
| Example 36 | 100 | 60 | 40 | 1.0 | No | No | No | No | 3 | 4 | 3 | 4 |
| Example 44 | 100 | 60 | 40 | 1.0 | Yes | Yes | No | No | 5 | 4 | 4 | 5 |
| Example 37 | 240 | 15 | 9 | 10 | No | No | No | No | 3 | 4 | 4 | 4 |
| Example 45 | 240 | 15 | 9 | 10 | Yes | No | Yes | Yes | 5 | 4 | 4 | 5 |
| Example 39 | 2500 | 15 | 10 | 100 | No | No | No | No | 4 | 4 | 4 | 4 |
| Example 46 | 2500 | 15 | 10 | 100 | Yes | Yes | No | Yes | 5 | 4 | 4 | 5 |
| Example 41 | 8000 | 5 | 3 | 1000 | No | No | No | No | 3 | 3 | 4 | 3 |
| Example 47 | 8000 | 5 | 3 | 1000 | Yes | Yes | No | No | 5 | 3 | 4 | 4 |

### (Plant-based almond milk)

A mixture containing 3 wt.% of almond protein, 2.5 wt.% of coconut oil, 2 wt.% of sugar, and 92.5 wt.% of water was prepared, and a microbial fermentation product containing lactones, isovaleric acid and phenethyl alcohol at concentrations as presented in Table 6 was added thereto. The mixture was heated to 80°C while being stirred and mixed, and then homogenized at a homogenizing pressure of 40 Kg/cm². The homogenized product was refrigerated to obtain plant-based almond milk. Sensory evaluation was performed. The results are presented in Table 9.

| Table 9 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 48 | 500 | 30 | 20 | 10 | 4 | 4 | 4 | 4 |

### (Preparation of plant-based oat milk)

A composition containing perfumes as lactones, isovaleric acid and phenethyl alcohol at concentrations as presented in Table 7 was added to oat milk. The mixture was heated to 80°C while being stirred and mixed, and then homogenized at a homogenizing pressure of 40 Kg/cm². The homogenized product was refrigerated to obtain plant-based oat milk containing 1.2 wt.% of oat protein. Sensory evaluation was performed. The results are presented in Table 10.

| Table 10 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 49 | 150 | 90 | 60 | 1.0 | 3 | 4 | 3 | 3 |

### (Preparation of plant-based cheese substitute material)

A mixture containing 15 wt.% of processed soymilk powder, 15 wt.% of starch, 25 wt.% of coconut oil, 1 wt.% of table salt, 0.2 wt.% of lactic acid, and 43.8 wt.% of water was prepared, and a microbial fermentation product containing lactones, isovaleric acid and phenethyl alcohol at concentrations as presented in Table 8 was added thereto. The mixture was heated to 80°C while being stirred and mixed, and then homogenized at a homogenizing pressure of 40 Kg/cm². The homogenized product was refrigerated to obtain a plant-based cheese substitute material containing 9.8 wt.% of soybean protein. Sensory evaluation was performed. The results are presented in Table 11.

| Table 11 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 50 | 3000 | 240 | 160 | 10 | 4 | 4 | 4 | 4 |

### (Preparation of cheese-like material)

A mixture containing 10 wt.% of processed soymilk powder, 10 wt.% of natural cheese, 2 wt.% of milk protein, 10 wt.% of starch, 22 wt.% of coconut oil, 0.7 wt.% of table salt, 0.1 wt.% of lactic acid, and 45.2 wt.% of water was prepared, and a microbial fermentation product containing lactones, isovaleric acid and phenethyl alcohol at concentrations as presented in Table 9 was added thereto. The mixture was heated to 80°C while being stirred and mixed, and then homogenized at a homogenizing pressure of 40 Kg/cm². The homogenized product was refrigerated to obtain a soymilk cheese containing 6.5 wt.% of soybean protein. Sensory evaluation was performed. The results are presented in Table 12.

| Table 12 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 51 | 50 | 60 | 40 | 0.5 | 3 | 4 | 4 | 4 |

### (Preparation of plant-based soymilk whipping cream)

A mixture containing 40 wt.% of soymilk cream (available from Fuji Oil Co., Ltd., solid content: 18.0%, protein: 5.6%, lipid: 12.3%), 30 wt.% of palm oil, 6 wt.% of sugar, 0.2 wt.% of starch, 0.5 wt.% of an emulsifier, and 23.3 wt.% of water was prepared, and a microbial fermentation product containing lactones, isovaleric acid and phenethyl alcohol at concentrations as presented in Table 10 was added thereto. The mixture was sterilized by direct heating at 144°C for 4 seconds, homogenized at a homogenizing pressure of 40 Kg/cm², and cooled to obtain a cream containing 2.2 wt.% of soybean protein. After cooling, the cream was aged for about 24 hours and whipped to obtain a whipped cream, and sensory evaluation was performed. The results are presented in Table 13.

| Table 13 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 52 | 100 | 10 | 10 | 5.0 | 4 | 4 | 4 | 4 |

### (Preparation of chocolate sauce)

A mixture containing 20 wt.% of soymilk, 35 wt.% of sugar, 20 wt.% of cocoa, 10 wt.% of palm oil, 0.1 wt.% of an emulsifier, and 14.9 wt.% of water was prepared, and a composition containing lactones, isovaleric acid and phenethyl alcohol at concentrations as presented in Table 8 was added thereto. The mixture was heated to 80°C while being stirred and mixed, followed by refrigeration to obtain a chocolate sauce containing 0.7 wt.% of soybean protein. Sensory evaluation was performed. The results are presented in Table 14.

| Table 14 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 53 | 2000 | 100 | 100 | 10 | 4 | 4 | 5 | 4 |

### (Preparation of plant-based meat fat substitute material)

A mixture containing 13 wt.% of a powdery soybean protein (available from Fuji Oil Co., Ltd., protein: 86.3%, lipid: 0.2%, carbohydrate: 3.5%), 50 wt.% of coconut oil, 2 wt.% of starch, 0.2 wt.% of sodium L-glutamate, and 34.8 wt.% of water was prepared, and a flavorant containing lactones, isovaleric acid and phenethyl alcohol at concentrations as presented in Table 12 was added thereto. The mixture was heated to 80°C while being stirred and mixed, and refrigerated to obtain a plant-based meat fat substitute material containing 11 wt.% of soybean protein. Sensory evaluation was performed. The results are presented in Table 15.

| Table 15 | Lactones (ppb) | Isovaleric acid (ppb) | Phenethyl alcohol (ppb) | (Lactones)/ (isovaleric acid and phenethyl alcohol) | Plant-based raw material masking effect | Strange flavor | Richness or thickness | Overall evaluation |
|---|---|---|---|---|---|---|---|---|
| Example 54 | 240 | 80 | 40 | 2.0 | 5 | 4 | 4 | 4 |

### (Preparation of drink containing milk protein)

A mixture containing 8 wt.% of total milk protein, 5 wt.% of skimmed milk powder, 3 wt.% of coconut oil, and 84 wt.% of water was prepared, and a composition containing lactones and isovaleric acid and/or phenethyl alcohol at concentrations as presented in Tables 16 to 22 was added thereto. The mixture was stirred and mixed, then homogenized at a homogenizing pressure of 50 Kg/cm², heated to 80°C, and then homogenized at a homogenizing pressure of 50 Kg/cm². The homogenized product was refrigerated to obtain a drink containing soybean protein. Sensory evaluation was performed. A drink containing milk protein was obtained by the same method using a microbial fermentation product containing lactones, isovaleric acid and phenethyl alcohol at concentrations as presented in Table 23, and sensory evaluation was performed. As the lactones, a combination of different lactones can be used.

### (Sensory evaluation)

The sensory evaluation was performed on 10 trained panelists, and the animal raw material off-flavor masking effect, the strange flavor, the richness or thickness, and the overall evaluation were evaluated on a 5-point scale from 1 point to 5 points, and the average value was calculated. The animal raw material off-flavor masking effect represents a masking effect when the masking effect without addition of any composition containing a microbial fermentation product and lactones, isovaleric acid and phenethyl alcohol was regarded as 1 point, and indicated that a higher masking effect was attained as the score became higher. For the strange flavor, a lower score indicated that off-flavors other than that from the animal raw material, specifically, isovaleric acid odor, rose-like odor derived from phenethyl alcohol, and lactone odor were stronger. The richness or thickness represents richness or thickness when the richness or thickness without addition of any composition containing a microbial fermentation product and lactones, isovaleric acid and phenethyl alcohol was regarded as 1 point, and indicated that a higher richness or thickness was attained as the score became higher. The overall evaluation represents an overall evaluation of deliciousness of the food set on the basis of the evaluation of the animal raw material off-flavor masking effect, the strange flavor, and the richness or thickness, and indicated that the food was highly evaluated as the score became higher, with the acceptability standard being 3 points or more. The numerical values of the animal raw material off-flavor masking effect, the strange flavor, the richness or thickness, and the overall evaluation are described as 1 when the average values are from 1.0 to 1.4, 2 when the average values are from 1.5 to 2.4, 3 when the average values are from 2.5 to 3.4, 4 when the average values are from 3.5 to 4.4, and 5 when the average values are from 4.5 to 5.0.

### Method for producing animal raw material masking flavorant mainly containing perfume (Examples 55 to 59)

| Table 16 | Example 55 | Example 56 | Example 57 | Example 58 | Example 59 |
|---|---|---|---|---|---|
| Isovaleric acid (ppb) | 900 | 900 | 900 | 900 | 900 |
| Phenethyl alcohol (ppb) | 100 | 100 | 100 | 100 | 100 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 1 | 1 | 1 | 1 | 1 |
| Animal raw material off-flavor masking effect | 4 | 4 | 4 | 4 | 4 |
| Strange flavor | 3 | 3 | 4 | 4 | 4 |
| Richness or thickness | 4 | 4 | 4 | 4 | 4 |
| Overall evaluation | 3 | 3 | 4 | 4 | 4 |

### Method for producing animal raw material masking flavorant mainly containing perfume (Implementations 60 to 63)

| Table 17 | Example 60 | Example 61 | Example 62 | Example 63 |
|---|---|---|---|---|
| Isovaleric acid (ppb) | 900 | 900 | 900 | 900 |
| Phenethyl alcohol (ppb) | 100 | 100 | 100 | 100 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 1 | 1 | 1 | 1 |
| Animal raw material off-flavor masking effect | 4 | 4 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing animal raw material masking flavorant mainly containing perfume (Examples 64 to 69)

| Table 18 | Example 64 | Example 65 | Example 66 | Example 67 | Example 68 | Example 69 |
|---|---|---|---|---|---|---|
| Isovaleric acid (ppb) | 900 | 900 | 900 | 900 | 900 | 900 |
| Phenethyl alcohol (ppb) | 100 | 100 | 100 | 100 | 100 | 100 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 1 | 1 | 1 | 1 | 1 | 1 |
| Animal raw material off-flavor masking effect | 4 | 4 | 4 | 4 | 4 | 4 |
| Strange flavor | 3 | 3 | 3 | 4 | 4 | 4 |
| Richness or thickness | 3 | 3 | 3 | 4 | 4 | 4 |
| Overall evaluation | 3 | 3 | 3 | 4 | 4 | 4 |

### Method for producing animal raw material masking flavorant mainly containing perfume (Examples 70 to 74)

| Table 19 | Example 70 | Example 71 | Example 72 | Example 73 | Example 74 |
|---|---|---|---|---|---|
| Isovaleric acid (ppb) | 5 | 5 | 5 | 5 | 5 |
| Phenethyl alcohol (ppb) | 5 | 5 | 5 | 5 | 5 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 100 | 100 | 100 | 100 | 100 |
| Animal raw material off-flavor masking effect | 3 | 3 | 3 | 3 | 4 |
| Strange flavor | 3 | 3 | 4 | 4 | 4 |
| Richness or thickness | 4 | 4 | 4 | 4 | 4 |
| Overall evaluation | 3 | 3 | 3 | 3 | 4 |

### Method for producing animal raw material masking flavorant mainly containing perfume (Examples 75 to 78)

| Table 20 | Example 75 | Example 76 | Example 77 | Example 78 |
|---|---|---|---|---|
| Isovaleric acid (ppb) | 5 | 5 | 5 | 5 |
| Phenethyl alcohol (ppb) | 5 | 5 | 5 | 5 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 100 | 100 | 100 | 100 |
| Animal raw material off-flavor masking effect | 4 | 4 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing animal raw material masking flavorant mainly containing perfume (Examples 79 to 84)

| Table 21 | Example 79 | Example 80 | Example 81 | Example 82 | Example 83 | Example 84 |
|---|---|---|---|---|---|---|
| Isovaleric acid (ppb) | 5 | 5 | 5 | 5 | 5 | 5 |
| Phenethyl alcohol (ppb) | 5 | 5 | 5 | 5 | 5 | 5 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 100 | 100 | 100 | 100 | 100 | 100 |
| Animal raw material off-flavor masking effect | 3 | 3 | 3 | 3 | 4 | 4 |
| Strange flavor | 3 | 3 | 3 | 4 | 4 | 4 |
| Richness or thickness | 3 | 3 | 3 | 4 | 4 | 4 |
| Overall evaluation | 3 | 3 | 3 | 3 | 4 | 4 |

The animal raw material masking flavorants exhibited the animal raw material masking effect due to the fact that they contained a predetermined proportion of lactone regardless of the type of lactone.

### Method for producing animal raw material masking flavorant mainly containing perfume (Examples 85 to 91 and Comparative Examples 8 to 12)

| Table 22 | Lactones (ppb) | Isovaleric acid (ppb) | Phenethyl alcohol (ppb) | (Lactones)/ (isovaleric acid and phenethyl alcohol) | Animal raw material off-flavor masking effect | Strange flavor | Richness or thickness | Overall evaluation |
|---|---|---|---|---|---|---|---|---|
| Comparative Example 8 | 5 | 60 | 0 | 0.08 | 2 | 2 | 2 | 2 |
| Comparative Example 9 | 1 | 12 | 0 | 0.08 | 2 | 3 | 2 | 2 |
| Comparative Example 10 | 10 | 0 | 120 | 0.08 | 3 | 2 | 2 | 2 |
| Comparative Example 11 | 1 | 0 | 12 | 0.08 | 2 | 3 | 2 | 2 |
| Example 85 | 10 | 60 | 0 | 0.17 | 3 | 2 | 3 | 3 |
| Example 86 | 10 | 0 | 60 | 0.17 | 3 | 3 | 3 | 3 |
| Example 87 | 100 | 60 | 40 | 1.0 | 4 | 3 | 3 | 3 |
| Example 88 | 240 | 15 | 9 | 10 | 4 | 4 | 4 | 4 |
| Example 89 | 1000 | 90 | 40 | 10 | 4 | 4 | 4 | 4 |
| Example 90 | 1600 | 40 | 60 | 160 | 4 | 3 | 4 | 4 |
| Example 91 | 8000 | 5 | 3 | 1000 | 3 | 3 | 3 | 3 |
| Comparative Example 12 | 16000 | 5 | 3 | 2000 | 3 | 2 | 3 | 2 |

The animal raw material masking flavorants exhibited the animal raw material masking effect due to the fact that, even when a combination of lactones were used, they contained the lactones at a predetermined proportion.

### Method for producing animal raw material masking flavorant mainly containing perfume or microbial fermentation product (Examples 92 to 97)

| Table 23 | Lactones (ppb) | Isovaleric acid (ppb) | Phenethyl alcohol (ppb) | (Lactones)/ (isovaleric acid and phenethyl alcohol) | Microbial fermentation product | Use of yeast | Use of koji mold | Use of lactic acid bacteria | Animal raw material off-flavor masking effect | Strange flavor | Richness or thickness | Overall evaluation |
|---|---|---|---|---|---|---|---|---|---|---|---|---|
| Example 92 | 5 | 30 | 20 | 0.1 | No | No | No | No | 3 | 3 | 2 | 3 |
| Example 93 | 5 | 30 | 20 | 0.1 | Yes | Yes | No | Yes | 4 | 3 | 3 | 3 |
| Example 87 | 100 | 60 | 40 | 1.0 | No | No | No | No | 4 | 3 | 3 | 3 |
| Example 94 | 100 | 60 | 40 | 1.0 | Yes | Yes | No | No | 5 | 4 | 4 | 4 |
| Example 88 | 240 | 15 | 9 | 10 | No | No | No | No | 4 | 4 | 4 | 4 |
| Example 95 | 240 | 15 | 9 | 10 | Yes | No | Yes | Yes | 5 | 4 | 5 | 5 |
| Example 90 | 1600 | 40 | 60 | 160 | No | No | No | No | 4 | 3 | 4 | 4 |
| Example 96 | 1600 | 40 | 60 | 160 | Yes | Yes | No | Yes | 5 | 4 | 5 | 5 |
| Example 91 | 8000 | 5 | 3 | 1000 | No | No | No | No | 3 | 3 | 3 | 3 |
| Example 97 | 8000 | 5 | 3 | 1000 | Yes | Yes | No | No | 5 | 3 | 4 | 4 |

### (Preparation of collagen drink)

A mixture containing 5 wt.% of skimmed milk powder, 3 wt.% of coconut oil, 1 wt.% of a porcine skin-derived collagen peptide, and 91 wt.% of water was prepared, and a microbial fermentation product containing lactones, isovaleric acid and phenethyl alcohol at concentrations as presented in Table 24 was added thereto. The mixture was stirred and mixed, then homogenized at a homogenizing pressure of 50 Kg/cm², heated to 80°C, and then homogenized at a homogenizing pressure of 50 Kg/cm². The homogenized product was refrigerated to obtain a drink containing collagen. Sensory evaluation was performed. The results are presented in Table 24.

| Table 24 | Lactones (ppb) | Isovaleric acid (ppb) | Phenethyl alcohol (ppb) | (Lactones)/ (isovaleric acid and phenethyl alcohol) | Animal raw material off-flavor masking effect | Strange flavor | Richness or thickness | Overall evaluation |
|---|---|---|---|---|---|---|---|---|
| Example 98 | 240 | 15 | 9 | 10 | 5 | 4 | 4 | 4 |

### (Preparation of soybean protein solution)

A mixture containing 5 wt.% of powdery soybean protein and 95 wt.% of water was prepared, and a composition containing lactones and isovaleric acid and/or phenethyl alcohol at concentrations as presented in Tables 25 to 31 was added thereto. The mixture was stirred and mixed, then homogenized at a homogenizing pressure of 100 Kg/cm², and subjected to retort heating at 121°C for 30 minutes (HISAKA WORKS, LTD.) to obtain a soybean protein solution, and sensory evaluation was performed. A soybean protein solution was obtained by the same method using a microbial fermentation product containing lactones, isovaleric acid and phenethyl alcohol at concentrations as presented in Table 32, and sensory evaluation was performed. As the lactones, a combination of different lactones can be used.

### (Sensory evaluation)

The sensory evaluation was performed on 10 trained panelists, and the retort odor masking effect, the strange flavor, the richness or thickness, and the overall evaluation were evaluated on a 5-point scale from 1 point to 5 points, and the average value was calculated. The retort odor masking effect represents a masking effect when the masking effect without addition of any composition containing a microbial fermentation product and lactones, isovaleric acid and phenethyl alcohol was regarded as 1 point, and indicated that a higher masking effect was attained as the score became higher. For the strange flavor, a lower score indicated that off-flavors other than the retort odor, specifically, isovaleric acid odor, rose-like odor derived from phenethyl alcohol, and lactone odor were stronger. The richness or thickness represents richness or thickness when the richness or thickness without addition of any composition containing a microbial fermentation product and lactones, isovaleric acid and phenethyl alcohol was regarded as 1 point, and indicated that a higher richness or thickness was attained as the score became higher. The overall evaluation represents an overall evaluation of deliciousness of the food set on the basis of the evaluation of the retort odor masking effect, the strange flavor, and the richness or thickness, and indicated that the food was highly evaluated as the score became higher, with the acceptability standard being 3 points or more. The numerical values of the retort odor masking effect, the strange flavor, the richness or thickness, and the overall evaluation are described as 1 when the average values are from 1.0 to 1.4, 2 when the average values are from 1.5 to 2.4, 3 when the average values are from 2.5 to 3.4, 4 when the average values are from 3.5 to 4.4, and 5 when the average values are from 4.5 to 5.0.

### Method for producing retort odor masking flavorant mainly containing perfume (Examples 99 to 103)

| Table 25 | Example 99 | Example 100 | Example 101 | Example 102 | Example 103 |
|---|---|---|---|---|---|
| Isovaleric acid (ppb) | 900 | 900 | 900 | 900 | 900 |
| Phenethyl alcohol (ppb) | 100 | 100 | 100 | 100 | 100 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 1 | 1 | 1 | 1 | 1 |
| Retort odor masking effect | 4 | 4 | 4 | 4 | 4 |
| Strange flavor | 3 | 3 | 4 | 4 | 4 |
| Richness or thickness | 3 | 3 | 3 | 4 | 4 |
| Overall evaluation | 3 | 3 | 4 | 4 | 4 |

### Method for producing retort odor masking flavorant mainly containing perfume (Examples 104 to 107)

| Table 26 | Example 104 | Example 105 | Example 106 | Example 107 |
|---|---|---|---|---|
| Isovaleric acid (ppb) | 900 | 900 | 900 | 900 |
| Phenethyl alcohol (ppb) | 100 | 100 | 100 | 100 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 1 | 1 | 1 | 1 |
| Retort odor masking effect | 4 | 4 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing retort odor masking flavorant mainly containing perfume (Examples 108 to 113)

| Table 27 | Example 108 | Example 109 | Example 110 | Example 111 | Example 112 | Example 113 |
|---|---|---|---|---|---|---|
| Isovaleric acid (ppb) | 900 | 900 | 900 | 900 | 900 | 900 |
| Phenethyl alcohol (ppb) | 100 | 100 | 100 | 100 | 100 | 100 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 1 | 1 | 1 | 1 | 1 | 1 |
| Retort odor masking effect | 4 | 4 | 4 | 4 | 4 | 4 |
| Strange flavor | 3 | 3 | 3 | 3 | 4 | 4 |
| Richness or thickness | 3 | 3 | 3 | 3 | 3 | 4 |
| Overall evaluation | 3 | 3 | 3 | 4 | 4 | 4 |

### Method for producing retort odor masking flavorant mainly containing perfume (Examples 114 to 118)

| Table 28 | Example 114 | Example 115 | Example 115 | Example 117 | Example 118 |
|---|---|---|---|---|---|
| Isovaleric acid (ppb) | 5 | 5 | 5 | 5 | 5 |
| Phenethyl alcohol (ppb) | 5 | 5 | 5 | 5 | 5 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 100 | 100 | 100 | 100 | 100 |
| Retort odor masking effect | 3 | 3 | 3 | 3 | 4 |
| Strange flavor | 3 | 3 | 4 | 4 | 4 |
| Richness or thickness | 3 | 3 | 3 | 3 | 4 |
| Overall evaluation | 3 | 3 | 3 | 3 | 4 |

### Method for producing retort odor masking flavorant mainly containing perfume (Examples 119 to 122)

| Table 29 | Example 119 | Example 120 | Example 121 | Example 122 |
|---|---|---|---|---|
| Isovaleric acid (ppb) | 5 | 5 | 5 | 5 |
| Phenethyl alcohol (ppb) | 5 | 5 | 5 | 5 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 100 | 100 | 100 | 100 |
| Retort odor masking effect | 4 | 4 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing retort odor masking flavorant mainly containing perfume (Examples 123 to 128

| Table 30 | Example 123 | Example 124 | Example 125 | Example 126 | Example 127 | Example 128 |
|---|---|---|---|---|---|---|
| Isovaleric acid (ppb) | 5 | 5 | 5 | 5 | 5 | 5 |
| Phenethyl alcohol (ppb) | 5 | 5 | 5 | 5 | 5 | 5 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 100 | 100 | 100 | 100 | 100 | 100 |
| Retort odor masking effect | 3 | 3 | 3 | 3 | 4 | 4 |
| Strange flavor | 3 | 3 | 3 | 4 | 4 | 4 |
| Richness or thickness | 3 | 3 | 3 | 3 | 3 | 4 |
| Overall evaluation | 3 | 3 | 3 | 3 | 3 | 4 |

The retort odor masking flavorants exhibited the retort odor masking effect due to the fact that they contained a predetermined proportion of lactone regardless of the type of lactone.

### Method for producing retort odor masking flavorant mainly containing perfume (Examples 129 to 135 and Comparative Examples 13 to 17)

| Table 31 | Lactones (ppb) | Isovaleric acid (ppb) | Phenethyl alcohol (ppb) | (Lactones)/ (isovaleric acid and phenethyl alcohol) | Retort odor masking effect | Strange flavor | Richness or thickness | Overall evaluation |
|---|---|---|---|---|---|---|---|---|
| Comparative Example 13 | 5 | 60 | 0 | 0.08 | 2 | 3 | 2 | 2 |
| Comparative Example 14 | 1 | 12 | 0 | 0.08 | 2 | 3 | 2 | 2 |
| Comparative Example 15 | 10 | 0 | 120 | 0.08 | 3 | 2 | 2 | 2 |
| Comparative Example 16 | 1 | 0 | 12 | 0.08 | 2 | 3 | 2 | 2 |
| Example 129 | 10 | 60 | 0 | 0.17 | 3 | 2 | 3 | 3 |
| Example 130 | 10 | 0 | 60 | 0.17 | 3 | 3 | 3 | 3 |
| Example 131 | 100 | 60 | 40 | 1.0 | 4 | 3 | 3 | 3 |
| Example 132 | 240 | 15 | 9 | 10 | 4 | 4 | 3 | 4 |
| Example 133 | 1000 | 90 | 40 | 10 | 4 | 4 | 4 | 4 |
| Example 134 | 1600 | 40 | 60 | 160 | 4 | 3 | 4 | 4 |
| Example 135 | 8000 | 5 | 3 | 1000 | 3 | 3 | 3 | 3 |
| Comparative Example 17 | 16000 | 5 | 3 | 2000 | 3 | 2 | 3 | 2 |

The retort odor masking flavorants exhibited the retort odor masking effect due to the fact that, even when a combination of lactones were used, they contained the lactones at a predetermined proportion.

### Method for producing retort odor masking flavorant mainly containing perfume or microbial fermentation product (Examples 136 to 141)

| Table 32 | Lactones (ppb) | Isovaleric acid (ppb) | Phenethyl alcohol (ppb) | (Lactones)/ (isovaleric acid and phenethyl alcohol) | Microbial fermentation product | Use of yeast | Use of koji mold | Use of lactic acid bacteria | Retort odor masking effect | Strange flavor | Richness or thickness | Overall evaluation |
|---|---|---|---|---|---|---|---|---|---|---|---|---|
| Example 136 | 5 | 30 | 20 | 0.1 | No | No | No | No | 3 | 3 | 2 | 3 |
| Example 137 | 5 | 30 | 20 | 0.1 | Yes | Yes | No | Yes | 4 | 3 | 3 | 3 |
| Example 131 | 100 | 60 | 40 | 1.0 | No | No | No | No | 4 | 3 | 3 | 3 |
| Example 138 | 100 | 60 | 40 | 1.0 | Yes | Yes | No | No | 5 | 4 | 4 | 4 |
| Example 132 | 240 | 15 | 9 | 10 | No | No | No | No | 4 | 4 | 3 | 4 |
| Example 139 | 240 | 15 | 9 | 10 | Yes | No | Yes | Yes | 5 | 4 | 5 | 5 |
| Example 134 | 1600 | 40 | 60 | 160 | No | No | No | No | 4 | 3 | 4 | 4 |
| Example 140 | 1600 | 40 | 60 | 160 | Yes | Yes | No | Yes | 5 | 4 | 5 | 5 |
| Example 135 | 8000 | 5 | 3 | 1000 | No | No | No | No | 3 | 3 | 3 | 3 |
| Example 141 | 8000 | 5 | 3 | 1000 | Yes | Yes | No | No | 5 | 3 | 4 | 4 |

### (Preparation of pea protein solution)

A mixture containing 3 wt.% of pea protein and 97 wt.% of water was prepared, and a microbial fermentation product containing lactones, isovaleric acid and phenethyl alcohol at concentrations as presented in Table 33 was added thereto. The mixture was stirred and mixed, then homogenized at a homogenizing pressure of 30 Kg/cm², and subjected to retort heating at 121°C for 30 minutes (HISAKA WORKS, LTD.) to obtain a pea protein solution, and sensory evaluation was performed. The results are presented in Table 33.

| Table 33 | Lactones (ppb) | Isovaleric acid (ppb) | Phenethyl alcohol (ppb) | (Lactones)/ (isovaleric acid and phenethyl alcohol) | Retort odor masking effect | Strange flavor | Richness or thickness | Overall evaluation |
|---|---|---|---|---|---|---|---|---|
| Example 142 | 1600 | 40 | 60 | 160 | 5 | 4 | 5 | 4 |

### (Preparation of milk protein solution)

A mixture containing 5 wt.% of total milk protein and 95 wt.% of water was prepared, and a microbial fermentation product containing lactones, isovaleric acid and phenethyl alcohol at concentrations as presented in Table 34 was added thereto. The mixture was stirred and mixed, then homogenized at a homogenizing pressure of 30 Kg/cm², and subjected to retort heating at 121°C for 30 minutes (HISAKA WORKS, LTD.) to obtain a milk protein solution, and sensory evaluation was performed. The results are presented in Table 34.

| Table 34 | Lactones (ppb) | Isovaleric acid (ppb) | Phenethyl alcohol (ppb) | (Lactones)/ (isovaleric acid and phenethyl alcohol) | Retort odor masking effect | Strange flavor | Richness or thickness | Overall evaluation |
|---|---|---|---|---|---|---|---|---|
| Example 143 | 240 | 15 | 9 | 10 | 5 | 4 | 5 | 4 |

### (Preparation of liquid food)

A mixture containing 16 wt.% of dextrin, 4.3 wt.% of powdery soybean protein, 2.5 wt.% of a vegetable oil and/or fat, 1.4 wt.% of milk protein, 0.8 wt.% of trisodium citrate, 0.4 wt.% of potassium chloride, 0.4 wt.% of an emulsifier, 0.2 wt.% of a microcrystalline cellulose preparation, 0.3 wt.% of Na hexametaphosphate, 0.03 wt.% of sodium chloride and 73.67 wt.% of water was prepared, and a microbial fermentation product containing lactones, isovaleric acid and phenethyl alcohol at concentrations as presented in Table 35 was added thereto. The mixture was stirred and mixed, then homogenized at a homogenizing pressure of 100 Kg/cm², and subjected to retort heating at 121°C for 30 minutes to obtain a liquid food as a nutrient liquid food. Sensory evaluation was performed. The results are presented in Table 35.

| Table 35 | Lactones (ppb) | Isovaleric acid (ppb) | Phenethyl alcohol (ppb) | (Lactones)/ (isovaleric acid and phenethyl alcohol) | Retort odor masking effect | Strange flavor | Richness or thickness | Overall evaluation |
|---|---|---|---|---|---|---|---|---|
| Example 144 | 200 | 50 | 50 | 2 | 5 | 4 | 4 | 4 |

### (Preparation of fish oil-containing emulsion)

A mixture containing 0.01 wt.% of purified fish oil (DHA content: 26%, EPA content: 7%), 3 wt.% of coconut oil, 0.1 wt.% of an emulsifier, and 96.89 wt.% of water was prepared, and a composition containing lactones and isovaleric acid and/or phenethyl alcohol at concentrations as presented in Tables 36 to 42 was added thereto. The mixture was stirred and mixed, then homogenized at a homogenizing pressure of 100 Kg/cm², heated to 80°C, and then homogenized at a homogenizing pressure of 50 Kg/cm². The homogenized product was refrigerated to obtain a fish oil-containing drink. Sensory evaluation was performed. A fish oil-containing emulsion was obtained by the same method using a microbial fermentation product containing lactones, isovaleric acid and phenethyl alcohol at concentrations as presented in Table 43, and sensory evaluation was performed. As the lactones, a combination of different lactones can be used.

### (Sensory evaluation)

The sensory evaluation was performed on 10 trained panelists, and the rancid fat odor masking effect, the strange flavor, the richness or thickness, and the overall evaluation were evaluated on a 5-point scale from 1 point to 5 points, and the average value was calculated. The rancid fat odor masking effect represents a masking effect when the masking effect without addition of any composition containing a microbial fermentation product and lactones, isovaleric acid and phenethyl alcohol was regarded as 1 point, and indicated that a higher masking effect was attained as the score became higher. For the strange flavor, a lower score indicated that off-flavors other than the rancid fat odor, specifically, isovaleric acid odor, rose-like odor derived from phenethyl alcohol, and lactone odor were stronger. The richness or thickness represents richness or thickness when the richness or thickness without addition of any composition containing a microbial fermentation product and lactones, isovaleric acid and phenethyl alcohol was regarded as 1 point, and indicated that a higher richness or thickness was attained as the score became higher. The overall evaluation represents an overall evaluation of deliciousness of the food set on the basis of the evaluation of the rancid fat odor masking effect, the strange flavor, and the richness or thickness, and indicated that the food was highly evaluated as the score became higher, with the acceptability standard being 3 points or more. The numerical values of the rancid fat odor masking effect, the strange flavor, the richness or thickness, and the overall evaluation are described as 1 when the average values are from 1.0 to 1.4, 2 when the average values are from 1.5 to 2.4, 3 when the average values are from 2.5 to 3.4, 4 when the average values are from 3.5 to 4.4, and 5 when the average values are from 4.5 to 5.0.

### Method for producing rancid fat odor masking flavor material mainly containing perfume (Examples 145 to 149)

| Table 36 | Example 145 | Example 146 | Example 147 | Example 148 | Example 149 |
|---|---|---|---|---|---|
| Isovaleric acid (ppb) | 900 | 900 | 900 | 900 | 900 |
| Phenethyl alcohol (ppb) | 100 | 100 | 100 | 100 | 100 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 1 | 1 | 1 | 1 | 1 |
| Rancid fat odor masking effect | 4 | 4 | 4 | 4 | 4 |
| Strange flavor | 3 | 3 | 3 | 3 | 3 |
| Richness or thickness | 3 | 3 | 3 | 3 | 4 |
| Overall evaluation | 3 | 3 | 3 | 3 | 3 |

### Method for producing rancid fat odor masking flavor material mainly containing perfume (Examples 150 to 153)

| Table 37 | Example 150 | Example 151 | Example 152 | Example 153 |
|---|---|---|---|---|
| Isovaleric acid (ppb) | 900 | 900 | 900 | 900 |
| Phenethyl alcohol (ppb) | 100 | 100 | 100 | 100 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 1 | 1 | 1 | 1 |
| Rancid fat odor masking effect | 4 | 4 | 4 | 4 |
| Strange flavor | 3 | 3 | 3 | 3 |
| Richness or thickness | 4 | 4 | 4 | 4 |
| Overall evaluation | 4 | 4 | 4 | 4 |

### Method for producing rancid fat odor masking flavor material mainly containing perfume (Examples 154 to 159)

| Table 38 | Example 154 | Example 155 | Example 156 | Example 157 | Example 158 | Example 159 |
|---|---|---|---|---|---|---|
| Isovaleric acid (ppb) | 900 | 900 | 900 | 900 | 900 | 900 |
| Phenethyl alcohol (ppb) | 100 | 100 | 100 | 100 | 100 | 100 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 1 | 1 | 1 | 1 | 1 | 1 |
| Rancid fat odor masking effect | 4 | 4 | 4 | 4 | 4 | 4 |
| Strange flavor | 3 | 3 | 3 | 3 | 4 | 4 |
| Richness or thickness | 3 | 3 | 3 | 3 | 3 | 4 |
| Overall evaluation | 3 | 3 | 3 | 3 | 3 | 4 |

### Method for producing rancid fat odor masking flavor material mainly containing perfume (Examples 160 to 164)

| Table 39 | Example 160 | Example 161 | Example 162 | Example 163 | Example 164 |
|---|---|---|---|---|---|
| Isovaleric acid (ppb) | 5 | 5 | 5 | 5 | 5 |
| Phenethyl alcohol (ppb) | 5 | 5 | 5 | 5 | 5 |
| δ-Hexalactone (ppb) | 1000 | | | | |
| δ-Octalactone (ppb) | | 1000 | | | |
| δ-Nonalactone (ppb) | | | 1000 | | |
| δ-Decalactone (ppb) | | | | 1000 | |
| δ-Undecalactone (ppb) | | | | | 1000 |
| (Lactones)/(isovaleric acid and phenethyl alcohol) | 100 | 100 | 100 | 100 | 100 |
| Rancid fat odor masking effect | 3 | 3 | 3 | 3 | 3 |
| Strange flavor | 3 | 3 | 3 | 3 | 4 |
| Richness or thickness | 3 | 3 | 3 | 4 | 4 |
| Overall evaluation | 3 | 3 | 3 | 3 | 4 |

### Method for producing rancid fat odor masking flavor material mainly containing perfume (Examples 165 to 168)

| Table 40 | Example 165 | Example 166 | Example 167 | Example 168 |
|---|---|---|---|---|
| Isovaleric acid (ppb) | 5 | 5 | 5 | 5 |
| Phenethyl alcohol (ppb) | 5 | 5 | 5 | 5 |
| δ-Dodecalactone (ppb) | 1000 | | | |
| δ-Tridecalactone (ppb) | | 1000 | | |
| δ-Tetradecalactone (ppb) | | | 1000 | |
| δ-Hexadecalactone (ppb) | | | | 1000 |
| (Lactones)/(isovaleric acid and phenethyl alcohol) | 100 | 100 | 100 | 100 |
| Rancid fat odor masking effect | 3 | 3 | 4 | 4 |
| Strange flavor | 4 | 4 | 4 | 4 |
| Richness or thickness | 4 | 4 | 4 | 4 |
| Overall evaluation | 4 | 4 | 4 | 4 |

### Method for producing rancid fat odor masking flavor material mainly containing perfume (Examples 169 to 174)

| Table 41 | Example 169 | Example 170 | Example 171 | Example 172 | Example 173 | Example 174 |
|---|---|---|---|---|---|---|
| Isovaleric acid (ppb) | 5 | 5 | 5 | 5 | 5 | 5 |
| Phenethyl alcohol (ppb) | 5 | 5 | 5 | 5 | 5 | 5 |
| γ-Hexalactone (ppb) | 1000 | | | | | |
| γ-Octalactone (ppb) | | 1000 | | | | |
| γ-Nonalactone (ppb) | | | 1000 | | | |
| γ-Decalactone (ppb) | | | | 1000 | | |
| γ-Undecalactone (ppb) | | | | | 1000 | |
| γ-Dodecalactone (ppb) | | | | | | 1000 |
| (Lactones)/(isovaleric acid and phenethyl alcohol) | 100 | 100 | 100 | 100 | 100 | 100 |
| Rancid fat odor masking effect | 3 | 3 | 3 | 3 | 4 | 4 |
| Strange flavor | 3 | 3 | 3 | 3 | 4 | 4 |
| Richness or thickness | 3 | 3 | 3 | 3 | 3 | 4 |
| Overall evaluation | 3 | 3 | 3 | 3 | 3 | 4 |

The rancid fat odor masking flavor materials exhibited the rancid fat odor masking effect due to the fact that they contained a predetermined proportion of lactone regardless of the type of lactone.

### Method for producing rancid fat odor masking flavor material mainly containing perfume (Examples 175 to 181 and Comparative Examples 18 to 22)

| Table 42 | Lactones (ppb) | Isovaleric acid (ppb) | Phenethyl alcohol (ppb) | (Lactones)/ (isovaleric acid and phenethyl alcohol) | Rancid fat odor masking effect | Strange flavor | Richness or thickness | Overall evaluation |
|---|---|---|---|---|---|---|---|---|
| Comparative Example 18 | 5 | 60 | 0 | 0.08 | 2 | 2 | 3 | 2 |
| Comparative Example 19 | 1 | 12 | 0 | 0.08 | 2 | 3 | 2 | 2 |
| Comparative Example 20 | 10 | 0 | 120 | 0.08 | 2 | 2 | 2 | 2 |
| Comparative Example 21 | 1 | 0 | 12 | 0.08 | 2 | 3 | 2 | 2 |
| Example 175 | 10 | 60 | 0 | 0.17 | 3 | 3 | 3 | 3 |
| Example 176 | 10 | 0 | 60 | 0.17 | 3 | 3 | 3 | 3 |
| Example 177 | 100 | 60 | 40 | 1.0 | 4 | 3 | 4 | 3 |
| Example 178 | 240 | 15 | 9 | 10 | 4 | 4 | 4 | 4 |
| Example 179 | 1000 | 90 | 40 | 10 | 4 | 3 | 4 | 4 |
| Example 180 | 1600 | 40 | 60 | 160 | 4 | 3 | 4 | 4 |
| Example 181 | 8000 | 5 | 3 | 1000 | 3 | 2 | 3 | 3 |
| Comparative Example 22 | 16000 | 5 | 3 | 2000 | 3 | 2 | 3 | 2 |

The rancid fat odor masking flavor materials exhibited the retort odor masking effect due to the fact that, even when a combination of lactones were used, they contained the lactones at a predetermined proportion.

### Method for producing rancid fat odor masking flavor material mainly containing perfume or microbial fermentation product (Examples 182 to 187)

| Table 43 | Lactones (ppb) | Isovaleric acid (ppb) | Phenethyl alcohol (ppb) | (Lactones)/ (isovaleric acid and phenethyl alcohol) | Microbial fermentation product | Use of yeast | Use of koji mold | Use of lactic acid bacteria | Rancid fat odor masking effect | Strange flavor | Richness or thickness | Overall evaluation |
|---|---|---|---|---|---|---|---|---|---|---|---|---|
| Example 182 | 5 | 30 | 20 | 0.1 | No | No | No | No | 3 | 2 | 3 | 3 |
| Example 183 | 5 | 30 | 20 | 0.1 | Yes | Yes | No | Yes | 4 | 3 | 3 | 3 |
| Example 177 | 100 | 60 | 40 | 1.0 | No | No | No | No | 4 | 3 | 4 | 3 |
| Example 184 | 100 | 60 | 40 | 1.0 | Yes | Yes | No | No | 5 | 4 | 4 | 4 |
| Example 178 | 240 | 15 | 9 | 10 | No | No | No | No | 4 | 4 | 4 | 4 |
| Example 185 | 240 | 15 | 9 | 10 | Yes | No | Yes | Yes | 5 | 4 | 4 | 4 |
| Example 180 | 1600 | 40 | 60 | 160 | No | No | No | No | 4 | 3 | 4 | 4 |
| Example 186 | 1600 | 40 | 60 | 160 | Yes | Yes | No | Yes | 5 | 4 | 5 | 5 |
| Example 181 | 8000 | 5 | 3 | 1000 | No | No | No | No | 3 | 2 | 3 | 3 |
| Example 187 | 8000 | 5 | 3 | 1000 | Yes | Yes | No | No | 4 | 3 | 4 | 4 |

### (Preparation of powdered polyunsaturated fatty acid-containing oil and/or fat)

As the polyunsaturated fatty acid (PUFA)-containing oil and/or fat, an oil and/or fat containing 21.2 mass% of DHA and EPA in total was used. An aqueous phase was prepared by dissolving 20.0 wt.% of dextrin and 4.0 wt.% of sodium caseinate in 50.0 wt.% of water at 60°C. An oil phase was prepared by dissolving 1 wt.% of monoglyceride ("Emulgy MS" which is a glycerin fatty acid ester available from RIKEN VITAMIN CO., LTD.) in 25 wt.% of the PUFA-containing oil and/or fat. An oil phase was mixed with the aqueous phase, and a microbial fermentation product containing lactones, isovaleric acid and phenethyl alcohol at concentrations as presented in Table 44 was added thereto. The mixture was stirred and mixed, then homogenized at a homogenizing pressure of 180 Kg/cm², heat-sterilized at 80°C for 10 minutes, and then subjected to spray drying to obtain a powdered oil and/or fat containing 10.6 mass% of DHA and EPA in total, and sensory evaluation was performed. Spray drying conditions were hot air at 150°C and ventilation air at 90°C.

| Table 44 | Lactones (ppb) | Isovaleric acid (ppb) | Phenethyl alcohol (ppb) | (Lactones)/ (isovaleric acid and phenethyl alcohol) | Rancid fat odor masking effect | Strange flavor | Richness or thickness | Overall evaluation |
|---|---|---|---|---|---|---|---|---|
| Example 188 | 1200 | 60 | 1140 | 1 | 4 | 4 | 4 | 4 |

### (Preparation of soybean oil-containing emulsion)

A mixture containing 15 wt.% of soybean oil (eicosenoic acid content: 0.2%, α-linolenic acid content: 7%, linoleic acid content: 52%, oleic acid content: 23%), 5 wt.% of total milk protein, 0.5 wt.% of trisodium citrate and 79.5 wt.% of water was prepared, and a microbial fermentation product containing lactones, isovaleric acid and phenethyl alcohol at concentrations as presented in Table 45 was added thereto. The mixture was stirred and mixed, then homogenized at a homogenizing pressure of 30 Kg/cm², heat-sterilized by at 80°C for 10 minutes, and then homogenized at a homogenizing pressure of 50 Kg/cm² to obtain a milk protein solution. Sensory evaluation was performed. The results are presented in Table 45.

| Table 45 | Lactones (ppb) | Isovaleric acid (ppb) | Phenethyl alcohol (ppb) | (Lactones)/ (isovaleric acid and phenethyl alcohol) | Rancid fat odor masking effect | Strange flavor | Richness or thickness | Overall evaluation |
|---|---|---|---|---|---|---|---|---|
| Example 189 | 240 | 15 | 9 | 10 | 4 | 4 | 5 | 4 |

### (Preparation of lipase-treated soybean oil-containing emulsion)

A mixture containing 15 wt.% of soybean oil (eicosenoic acid content: 0.2%, α-linolenic acid: 7%, linoleic acid: 52%, oleic acid: 23%), 5 wt.% of total milk protein, 0.5 wt.% of trisodium citrate, 79.5 wt.% of water and 0.02 wt.% of lipase was prepared, and subjected to lipase treatment at 45°C for 1 hour. After the lipase treatment, a microbial fermentation product containing lactones, isovaleric acid and phenethyl alcohol at concentrations as presented in Table 46 was added to the mixture. The mixture was stirred and mixed, then homogenized at a homogenizing pressure of 30 Kg/cm², heat-sterilized at 80°C for 10 minutes, and then homogenized at a homogenizing pressure of 50 Kg/cm² to obtain a milk protein solution, and sensory evaluation was performed. The results are presented in Table 46.

| Table 46 | Lactones (ppb) | Isovaleric acid (ppb) | Phenethyl alcohol (ppb) | (Lactones)/ (isovaleric acid and phenethyl alcohol) | Rancid fat odor masking effect | Strange flavor | Richness or thickness | Overall evaluation |
|---|---|---|---|---|---|---|---|---|
| Example 190 | 240 | 15 | 9 | 10 | 5 | 4 | 5 | 4 |

## Claims

1. A masking flavorant comprising: isovaleric acid and/or phenethyl alcohol; and lactones, and having a weight ratio (lactones)/(isovaleric acid and phenethyl alcohol) of 0.1 or more and 1000 or less.

2. The masking flavorant according to claim 1, wherein at least one selected from the group consisting of the isovaleric acid, the phenethyl alcohol, and the lactones is a microbial fermentation product by (A) yeast and/or koji mold, or (B) yeast and/or koji mold, and lactic acid bacteria.

3. A food comprising the masking flavorant described in claim 1 or 2, the food having a content of the lactones of 1 ppb or more on a weight basis.

4. The food according to claim 3, which is free of an animal-derived raw material.

5. The food according to claim 3, comprising: an unsaturated fatty acid; and/or unsaturated fatty acid-containing oil and/or fat.

6. The food according to claim 3, comprising a powdered oil and/or fat of: an unsaturated fatty acid; and/or unsaturated fatty acid-containing oil and/or fat.

7. A production method of a food, the production method comprising adding a masking flavorant, the masking flavorant comprising: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis.

8. The production method according to claim 7, comprising heat-sterilizing.

9. The production method according to claim 7, wherein a protein is contained in an amount of 1 wt.% or more.

10. A method for masking an off-flavor of a plant-based raw material in a food, the method comprising adding a masking flavorant to a food, the masking flavorant comprising: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.

11. The method according to claim 10, wherein the food is free of an animal raw material.

12. A method for masking an off-flavor of an animal raw material in a food, the method comprising adding a masking flavorant to a food, the masking flavorant comprising: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.

13. A method for masking a retort odor in a heat-sterilized food, the method comprising adding a masking flavorant to a food, the masking flavorant comprising: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.

14. The method according to claim 13, wherein a protein is contained in an amount of 1 wt.% or more in the food.

15. A method for masking a rancid fat odor in a food, the method comprising adding a masking flavorant to a food, the masking flavorant comprising: isovaleric acid and/or phenethyl alcohol; and lactones, and having a weight ratio (lactones)/(isovaleric acid and phenethyl alcohol) of 0.1 or more and 1000 or less, wherein the lactones are contained in an amount of 1 ppb or more on a weight basis in the food.

16. The method according to claim 15, wherein an unsaturated fatty acid and/or unsaturated fatty acid-containing oil and/or fat is contained.

17. The method according to claim 15, wherein a powdered oil and/or fat of: an unsaturated fatty acid; and/or unsaturated fatty acid-containing oil and/or fat is contained.
